# EUROPEAN PATENT SPECIFICATION

(11) **EP 3 106 374 B1**
(45) Date of publication and mention of the grant of the patent: **25.07.2018**
(21) Application number: 15178194.5
(22) Date of filing: 24.07.2015
(51) Int. Cl.: B62D 53/06

(54) **FORESTRY TRAILER WITH A MECHANISM FOR MOVING WHEEL AXLES**
FORSTANHÄNGER MIT EINEM MECHANISMUS ZUM BEWEGEN VON RADACHSEN
REMORQUE FORESTIÈRE AVEC UN MÉCANISME POUR DÉPLACER LES ESSIEUX DE ROUE

(30) Priority: 19.06.2015 SI 201500153
(43) Date of publication of application: 21.12.2016
(73) Proprietor: Pisek - Vitli Krpan, d.o.o., 3240 Smarje pri Jelsah (SI)
(72) Inventor: Pisek, Franc, 3240 Smarje pri Jelsah (SI)
(74) Representative: Flak, Antonija

(56) References cited:
- DE-A1- 3 620 328
- DE-U1-202004 006 840
- FR-A1- 2 809 356
- US-A- 4 204 697
- US-A- 5 346 233
- US-A- 5 658 000

## Description

### Field of the invention

The invention belongs to the field of mechanical engineering, more precisely to the field of cargo trailers for transport of various heavy loads, particularly harvested logs.

### Technical problem

The technical problem, which is solved by the present invention, is construction of a mechanism on the bottom part of a cargo trailer for transport of heavy loads, particularly logs from a forest, which will enable movement of undercarriage axle relatively to the chassis in order to adjust the gravity centre of the loaded cargo. The construction should enable movement of an empty or a loaded forest trailer with or without a lift. The mechanism should be designed in such a way that it allows control from the trailer, cabin of a cargo vehicle or a tractor, as well as control from a distance. The main problem is how to change the gravity centre of the trailer without the user having to physically interfere with the machine.

### State of the art

Known solutions of the technical problem usually include unscrewing one or more screws and then applying an outer force or moving the tractor and the trailer itself when their wheels are immobilized in order to move the axle forwards or backwards along the longitudinal axis. In this way the gravity centre of the trailer is moved. When the axle with single, double or more wheels is moved on one side, the axle needs to be screwed back, so that it does not move forwards or backwards during driving. Such solutions are inconvenient as they are time consuming, therefore users during daily work rarely decide to change the gravity centre of a trailer. Consequently users set the gravity centre to a specific point and do not move it. Additionally, manual axle movement requires several different accessories, such as keys for screwing and unscrewing as well as wedges, in order to move the axle.

The majority of forest trailers have a flexible tandem chassis, which allows easier overcoming of obstacles on the path. Smaller forest trailers usually have a massive one-shaft frame, while larger trailers have a two-shaft frame. Almost all trailers have the possibility to move the chassis with wheels and adjust the gravity centre, so that up to eight meters long logs can be transported with lighter trailers, but the movement has to be done manually.

Patent application EP2353352 A1 describes a trailer, wherein wheels can be moved backwards and forwards independently one from another with a manually controlled mechanism.

Patent application EP2565077 A1 and US5346233 discloses a solution for a trailer, which enables axle movement backwards/forwards with regard to the trailer chassis and consequently elongation of the trailer.

The above mentioned known solutions include manual manipulation for moving wheel axles and gravity centres of already loaded trailers. The present invention differs from known solutions in that the axle with wheels can be moved hydraulically or pneumatically through management of individual elements of a hydraulic, pneumatic, electrohydraulic or electro-pneumatic circuit.

The closest document to the present invention is document US5346233, which discloses a slider for adjusting the position of the dual axles of a semi-trailer. The slider comprises an apertured track which extends longitudinally along the bottom of a trailer and a dual axle carriage slidably coupled to the track. A pneumatically operated pin is attached to the carriage for selectively extending and retracting a pin into the aperture. The slider further includes a hydraulic cylinder for sliding the carriage along the track while the pin is retracted whereby the position of the carriage and the dual axles can be slidably adjusted. This solution has in common with the present invention in that it has a tandem chassis with holders of wheels, mounted transversely to longitudinal parts of the chassis, wherein two hydraulic cylinders are mounted parallel to the longitudinal parts of the chassis, which through hydraulic, pneumatic, electrohydraulic and/or electro-pneumatic control move the tandem chassis with holders of wheels forwards and/or backwards longitudinally along the chassis.

### Description of the solution

The essence of the forestry trailer with a mechanism for moving wheel axles according to the invention is in that a tandem chassis with holders for wheels is mounted transversely to longitudinal parts of a chassis, wherein two hydraulic cylinders are mounted parallel to the longitudinal parts of the chassis, which through hydraulic, pneumatic, electrohydraulic and/or electro-pneumatic control move the tandem chassis with wheel holders forwards and/or backwards along the chassis. A command for movement of the chassis is made with a remote control, which may be in the forestry trailer or in a tractor.

The forestry trailer with the mechanism for moving wheel axles will be described in further detail based on the following figures, which show:

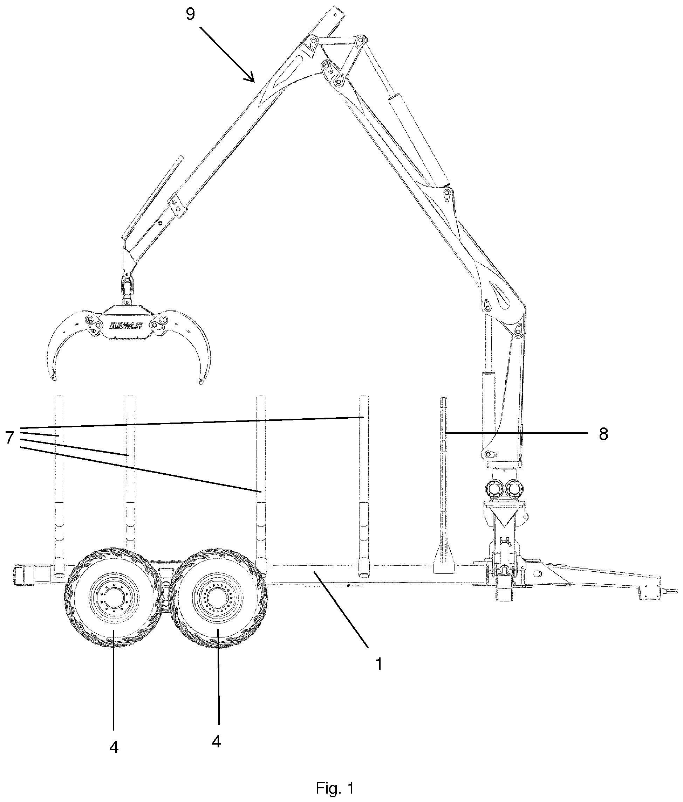

- Figure 1: A view of the trailer with a lift,

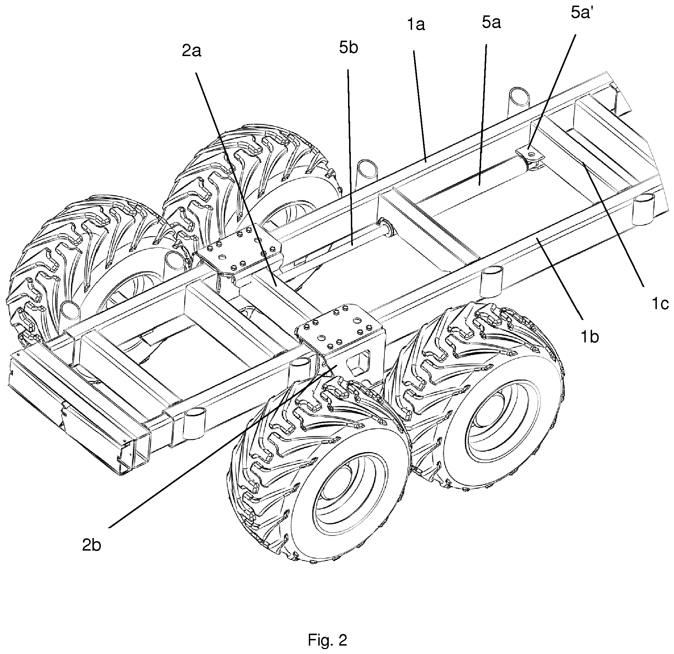

- Figure 2: A holder of tandem axles from above,

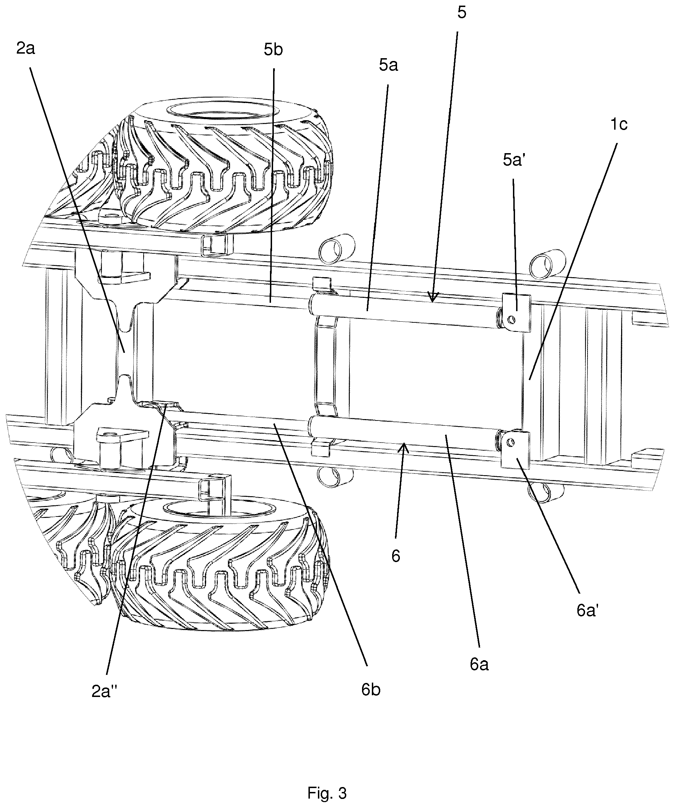

- Figure 3: A holder of tandem axles from below,

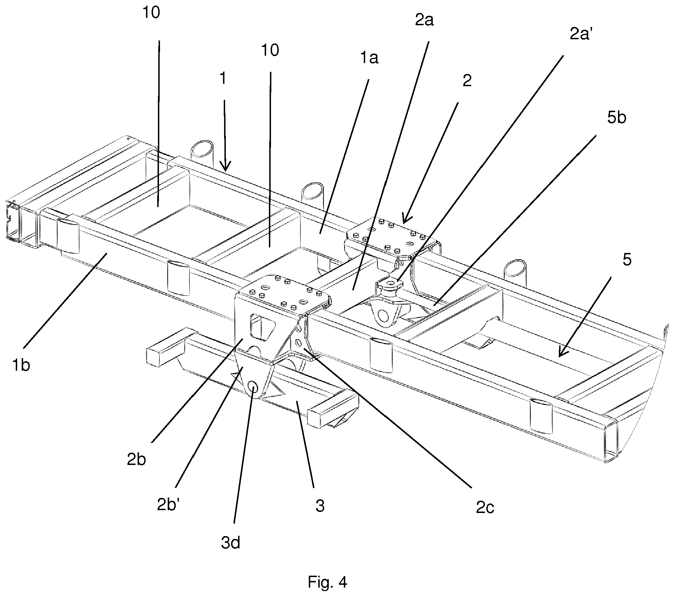

- Figure 4: A chassis of the trailer with a tandem chassis and hydraulic cylinders.

The forestry trailer with the mechanism for moving wheel axles has a tandem chassis 2 with holders 3 of wheels 4 mounted transversely to longitudinal parts 1a and 1b of a chassis 1, wherein hydraulic cylinders 5 and 6 are mounted parallel to the longitudinal parts 1a and 1b of the chassis 1, which through hydraulic, pneumatic, electrohydraulic and/or electro-pneumatic control move the chassis 2 with holders 3 of wheels 4 longitudinally along the chassis 1.

The forestry trailer with the mechanism for moving wheel axles for changing the centre of gravity is preferably a forest trailer, which has on parts 1a and 1b of the chassis 1 several pairs of tines 7, a safety net 8 and a lift 9. A pair of hydraulic cylinders 5 and 6 is mounted between a transverse part 1c of the chassis 1 and a transverse part 2a of the tandem chassis 2 and parallel to the longitudinal parts 1a and 1b. A tube 5a of the cylinder 5 is with an accessory 5a' mounted onto the transverse part 1c. A piston rod 5b of the cylinder 5 is attached to an accessory 2a'. The hydraulic cylinder 6 is mounted parallel to the cylinder 5 and part 1b of the chassis 1. The tandem chassis 2 consists of the transverse part 2a, which has an accessory 2b in the shape of a double U profile, wherein an inner part 2c is adapted to the shape of parts 1a and 1b of the chassis 1, while holder 3 of wheels 4 are pivotally mounted between outer parts 2b'. Holders 3 of wheels 4 are in relation to the longitudinal axle of the chassis 1 pivotally mounted onto the part 2b' with the help of axle 3d, which allows adaptation of wheels to the terrain. The chassis 1 may have one or more additional racks 10 for trailer reinforcement. The hydraulic cylinder 5 may be mounted on the longitudinal part 1a, the transverse part 1c and/or on a junction of parts 1a and 1c and on the other side to the tandem chassis 2 parallel to the longitudinal parts 1a and 1b. The hydraulic cylinder 6 with an accessory 6a'may be mounted to the longitudinal part 1b, the transverse part 1c and/or on a junction of parts 1b and 1c. The piston rod 5b of the cylinder 5 is mounted on the accessory 2a' of the transverse part 2a. A piston rod 6b of the cylinder 6 is mounted on an accessory 2a" of the transverse part 2a. The hydraulic cylinder 6 is a mirror image of the cylinder 5 across the longitudinal axle of the trailer and is mounted parallel to the cylinder 5. Hydraulic cylinders 5 and 6 may be controlled in any known way.

The forestry trailer according to the invention may be constructed in such a way that one, two or more hydraulic or pneumatic cylinders may be used, preferably two, which are installed in the inner or on the outer part of the chassis.

Sliding of the chassis 2 may be achieved by different means. The first option is that the sliding plates of inner parts 2c are made of an artificial material or any other appropriate material, which allows sliding on flat surfaces. The second option is that the undercarriage and the chassis are in a direct contact metal-metal and that a system for lubrication of sliding plates is installed. The direct metal-metal contact of the undercarriage and the chassis may be without the system for lubrication.

The forestry trailer with the mechanism for moving wheel axles is designed in such a way that it enables movement of trailer's gravity centre with or without a load in relation to the axle of mounting of the wheel holder via the pair of hydraulic cylinders, which are installed between the transverse connection of the trailer chassis and to the latter parallel holder of tandem wheels. One end of the hydraulic cylinder is attached to the holder of tandem axles, while the other end of the hydraulic cylinder is attached to the chassis.

The forestry trailer with the mechanism for moving wheel axles for changing the centre of gravity is preferably a forest trailer with a lift, which allows loading logs onto the trailer. The pair of hydraulic cylinders may be controlled via a hydraulic, pneumatic, electrohydraulic or electro-pneumatic circuit. Due to the movement of tandem axles holder with the help of one, two or more hydraulic cylinders the tandem chassis with the holder of wheels may be moved longitudinally along the chassis axle, when the latter is empty or even fully loaded. Axle or trailer's gravity centre movement, respectively, are limited with the length of the hydraulic cylinders. Gravity centre movement forwards or backwards may be done during every ride, depending on the length of logs to be transported. The chassis of the trailer may be made of different profiles, which can be open and/or closed, wherein the chassis may be one-, two- or more-piped in the longitudinal axle of the trailer, preferably two-piped. The profiles may be rectangular, curved and/or welded in any shape and size.

When the user gives a signal or a command with a control handle, which is operated from a tractor, the forestry trailer or via a remote controller, the hydraulic or the pneumatic system according to the hydraulic or pneumatic scheme of the system re-steers and begins to move the holder for wheels forwards or backwards. In this way the gravity centre of the trailer is adapted to the length of wood, which is loaded and transported by the user. This prevents unwanted excessive discharge of the rear axle of the tractor due to unsuitable centre of gravity and consequently loss of tractive power. In a worst case scenario the tractor could be overturned. The tandem chassis with the holder for wheels may have one, two or more pairs of wheels, which depends on the size and load capacity of the trailer.

The forestry trailer is made in such a way that the parts of the chassis together with reinforcement battens are welded or screwed together.

The forestry trailer with the mechanism for moving wheel axles can have instead of hydraulic cylinders a hydromotor with an appropriately mounted toothed rack or any other system, which transforms circular movement into linear movement.

## Claims

1. A forestry trailer with a mechanism for moving wheel axles, wherein the mechanism has a tandem chassis (2) with holders (3) of wheels (4) is mounted transversely to longitudinal parts (1a and 1b) of a chassis (1), wherein two hydraulic cylinders (5 and 6) are mounted parallel to the longitudinal parts (1a and 1b) of the chassis (1), which through hydraulic, pneumatic, electrohydraulic and/or electro-pneumatic control move the tandem chassis (2) with holders (3) of wheels (4) forwards and/or backwards longitudinally along the chassis (1), **characterized in that** the mechanism has on parts (1a and 1b) of the chassis (1) several pairs of tines (7), a safety net (8) and a lift (9); that a pair of hydraulic cylinders (5 and 6) is mounted between a transverse part (1c) of the chassis (1) and a transverse part (2a) of the tandem chassis (2) and parallel to longitudinal parts (1a and 1b); that a tube (5a) of the cylinder (5) is with an accessory (5a') mounted onto the transverse part (1c); that a piston rod (5b) of the cylinder (5) is attached to an accessory (2a'); that the hydraulic cylinder (6) is mounted parallel to the cylinder (5) and the part (1b) of the chassis (1); that the tandem chassis (2) consists of the transverse part (2a), which has an accessory (2b) in the shape of a double U profile, wherein an inner part (2c) is adapted to the shape of parts (1a and 1b) of the chassis (1), while holder (3) of wheels (4) are pivotally mounted between outer parts (2b'); that holders (3) of wheels (4) are in relation to the longitudinal axle of the chassis (1) pivotally mounted onto the part (2b') with the help of axle (3d), which allows adaptation of wheels to the terrain.

2. The forestry trailer with the mechanism for moving wheel axles according to claim 2 or claim 3, **characterized in that** the hydraulic cylinders (5 and 6) may be mounted onto:
a. the longitudinal parts (1a and 1b) and the tandem chassis (2) parallel to the longitudinal parts (1a and 1b); or
b. the transverse part (1c) and the tandem chassis (2) parallel to the longitudinal parts (1a and 1b); or
c. the first junction of parts (1a and 1c) and the second junction of parts (1b and 1c) and the tandem chassis (2) parallel to the longitudinal parts (1a and 1b).

3. The forestry trailer with the mechanism for moving wheel axles according to any of the preceding claims **characterized in that** it has one, two or more hydraulic or pneumatic cylinders, which may be installed in the inner or the outer part of the chassis.

4. The forestry trailer with the mechanism for moving wheel axles according to any of the preceding claims, **characterized in that** a command for movement of the chassis (2) is made with a remote control, which may be in the cargo trailer itself or in a tractor.

5. The forestry trailer with the mechanism for moving wheel axles according to any of the preceding claims, **characterized in that** movement of the chassis (2) is performed by means of a hydromotor and with an appropriately mounted toothed rack or any other system, which transforms circular movement into linear movement.

6. The forestry trailer with the mechanism for moving wheel axles according to any of the preceding claims, **characterized in that** the chassis (1) is made of a one-shaft, two-shaft or more-shaft frame, preferably of a two-shaft frame, wherein the shaft of the frame may have any shape, preferably the shape of a tube.

7. The forestry trailer with the mechanism for moving wheel axles according to any of the preceding claims, **characterized in that** the accessories (2c) of the chassis (2) are preferably manufactured as U profiles.

8. The forestry trailer with the mechanism for moving wheel axles according to any of the preceding claims, **characterized in that** the accessories (2c) of the chassis (2) are adapted to the shape of the parts (1a and 1b) of the chassis (1).

9. The forestry trailer with the mechanism for moving wheel axles according to any of the preceding claims, **characterized in that** sliding surfaces of the chassis (2) may be covered with any material for lowering friction and wear, preferably with artificial materials.

10. The forestry trailer with the mechanism for moving wheel axles according to any of the preceding claims, **characterized in that** sliding surfaces are without additional sliding plates and the junction between the tandem chassis (2) and the chassis (1) is made as a direct metal-metal contact with or without an integrated system for lubrication.

## Patentansprüche

1. Forstanhänger mit einem Mechanismus zum Bewegen von Radachsen, wobei der Mechanismus ein Tandemfahrgestell (2) mit Halterungen (3) der Räder (4) aufweist und das quer zu den Längsteilen (1a und 1b) eines Fahrgestells (1) gelagert ist, wobei zwei Hydraulikzylinder (5 und 6) parallel zu den Längsteilen (1a und 1b) des Fahrgestells (1) gelagert sind, die durch eine hydraulische, pneumatische, elektrohydraulische und/oder elektropneumatische Steuerung das Tandemfahrgestell (2) mit Halterungen (3) der Räder (4) in Längsrichtung entlang des Fahrgestells vorwärts und/oder rückwärts bewegen, **dadurch gekennzeichnet, dass** der Mechanismus an den Teilen (1a und 1b) des Fahrgestells (1) mehrere Zinkenpaare (7), ein Sicherheitsnetz (8) und einen Aufzug (9) aufweist; dass ein Paar Hydraulikzylinder (5 und 6) zwischen einem Querteil (1c) des Fahrgestells (1) und einem Querteil (2a) des Tandemgestells (2) und parallel zu den Längsteilen (1a und 1b) gelagert ist; dass ein Rohr (5a) des Zylinders (5) mit einem Zubehörteil (5a') am Querteil (1c) gelagert ist; dass eine Kolbenstange (5b) des Zylinders (5) an einem Zubehörteil (2a') befestigt ist; dass der Hydraulikzylinder (6) parallel zu dem Zylinder (5) und dem Teil (1b) des Fahrgestells (1) gelagert ist; dass das Tandemfahrgestell (2) aus dem Querteil (2a) besteht, das ein Zubehörteil (2b) in Form eines Doppel-U-Profils aufweist, wobei ein Innenteil (2c) an die Form der Teile (1a und 1b) des Fahrgestells (1) angepasst ist, während die Halterung (3) der Räder (4) zwischen den Außenteilen (2b') drehbar gelagert ist; dass die Halterungen (3) der Räder (4) in Bezug auf die Längsachse des Fahrgestells (1) mit Hilfe einer Achse (3d) schwenkbar an dem Teil (2b') gelagert sind, was eine Anpassung der Räder an das Gelände ermöglicht.

2. Forstanhänger mit einem Mechanismus zum Bewegen von Radachsen nach Anspruch 2 oder Anspruch 3, **dadurch gekennzeichnet, dass** die Hydraulikzylinder (5 und 6) an den Folgenden gelagert werden können:
a. den Längsteilen (1a und 1b) und dem Tandemfahrgestell (2) parallel zu den Längsteilen (1a und 1b); oder
b. am Querteil (1c) und dem Tandemfahrgestell (2) parallel zu den Längsteilen (1a und 1b); oder
c. an der ersten Verbindung der Teile (1a und 1c) und der zweiten Verbindung der Teile (1b und 1c) und am Tandemfahrgestell (2) parallel zu den Längsteilen (1a und 1b).

3. Forstanhänger mit einem Mechanismus zum Bewegen von Radachsen nach einem der vorhergehenden Ansprüche, **dadurch gekennzeichnet, dass** er einen, zwei oder mehrere hydraulische oder pneumatische Zylinder aufweist, die im Innenteil oder im Außenteil des Fahrgestells angeordnet werden können.

4. Forstanhänger mit einem Mechanismus zum Bewegen von Radachsen nach einem der vorhergehenden Ansprüche, **dadurch gekennzeichnet, dass** ein Bewegungsbefehl des Fahrgestells (2) mit einer Fernsteuerung ausgeführt werden kann, der sich im Ladeanhänger selbst oder in einem Traktor befinden kann.

5. Forstanhänger mit einem Mechanismus zum Bewegen von Radachsen nach einem der vorhergehenden Ansprüche, **dadurch gekennzeichnet, dass** die Bewegung des Fahrgestells (2) mittels eines Hydromotors und mittels einer entsprechend gelagerten Zahnstange oder einem sonstigen System erfolgt, das eine Kreisbewegung in eine Linearbewegung umwandelt.

6. Forstanhänger mit einem Mechanismus zum Bewegen von Radachsen nach einem der vorhergehenden Ansprüche, **dadurch gekennzeichnet, dass** das Fahrgestell (1) aus einem ein-, zwei- oder mehrwelligen Rahmen besteht, vorzugsweise aus einem zweiwelligen Rahmen, wobei die Welle des Rahmens eine beliebige Form, vorzugsweise die Form eines Rohres, aufweisen kann.

7. Forstanhänger mit einem Mechanismus zum Bewegen von Radachsen nach einem der vorhergehenden Ansprüche, **dadurch gekennzeichnet, dass** die Zubehörteile (2c) des Fahrgestells (2) vorzugsweise als U-Profile gefertigt sind.

8. Forstanhänger mit einem Mechanismus zum Bewegen von Radachsen nach einem der vorhergehenden Ansprüche, **dadurch gekennzeichnet, dass** die Zubehörteile (2c) des Fahrgestells (2) an die Form der Teile (1a und 1 b) des Fahrgestells (1) angepasst sind.

9. Forstanhänger mit einem Mechanismus zum Bewegen von Radachsen nach einem der vorhergehenden Ansprüche, **dadurch gekennzeichnet, dass** die Gleitflächen des Fahrgestells (2) mit einem beliebigen Material zur Reibungungsreduzierung und Verschleißminderung, vorzugsweise mit künstlichen Materialien, bedeckt sein können.

10. Forstanhänger mit einem Mechanismus zum Bewegen von Radachsen nach einem der vorhergehenden Ansprüche, **dadurch gekennzeichnet, dass** die Gleitflächen keine zusätzlichen Gleitplatten aufweisen und der Übergang zwischen dem Tandemfahrgestell (2) und dem Fahrgestell (1) als direkter Metall-Metall-Kontakt, mit oder ohne integriertes System zur Schmierung ausgebildet ist.

## Revendications

1. Une remorque forestière avec un mécanisme de déplacement des essieux, dans lequel le mécanisme a un châssis en tandem (2) avec des supports (3) de roues (4) et est monté transversalement à des parties longitudinales (1a et 1b) d'un châssis (1), deux vérins hydrauliques (5 et 6) sont montés parallèlement aux parties longitudinales (1a et 1b) du châssis (1), qui, par l'intermédiaire d'une commande hydraulique, pneumatique, électrohydraulique et/ou électropneumatique déplacent le châssis en tandem (2) avec les supports (3) de roues (4) vers l'avant et/ou vers l'arrière longitudinalement le long du châssis (1), **caractérisée en ce que** le mécanisme comporte sur des parties (1a et 1b) du châssis (1) plusieurs paires de fourchons (7), un filet de sécurité (8) et un système de levage (9) ; qu'une paire de vérins hydrauliques (5 et 6) est montée entre une partie transversale (1c) du châssis (1) et une partie transversale (2a) du châssis en tandem (2) et en parallèle aux parties longitudinales (1a and 1b) ; qu'un tube (5a) du vérin (5) est pourvu d'un accessoire (5a') monté sur la partie transversale (1c) ; qu'une tige de piston (5b) du vérin (5) est fixée à un accessoire (2a') ; que le vérin hydraulique (6) est monté parallèlement au vérin (5) et à la partie (1b) du châssis (1) ; que le châssis en tandem (2) est constitué de la partie transversale (2a), qui présente un accessoire (2b) en forme d'un profilé en double U, une partie intérieure (2c) étant adaptée à la forme des parties (1a et 1b) du châssis (1), tandis que des supports (3) de roues (4) sont montés de manière pivotante entre les parties externes (2b') ; que les supports (3) des roues (4) sont, par rapport à l'axe longitudinal du châssis (1), montés de manière pivotante sur la pièce (2b') à l'aide d'un axe (3d), ce qui permet l'adaptation des roues au terrain.

2. La remorque forestière avec le mécanisme de déplacement des essieux selon la revendication 2 ou la revendication 3, **caractérisée en ce que** les vérins hydrauliques (5 et 6) peuvent être montés sur :
a. les parties longitudinales (1a et 1b) et le châssis en tandem (2) parallèlement aux parties longitudinales (1a and 1b) ; ou
b. la partie transversale (1c) et le châssis en tandem (2) parallèlement aux parties longitudinales (1a et 1b) ; ou
c. la première jonction des parties (1a et 1c) et la deuxième jonction des parties (1b et 1c) et le châssis en tandem (2) parallèlement aux parties longitudinales (1a et 1b).

3. La remorque forestière avec le mécanisme de déplacement des essieux selon l'une quelconque des revendications précédentes, **caractérisée en ce qu'**elle a un, deux ou plusieurs vérins hydrauliques ou pneumatiques, qui peuvent être installés dans la partie intérieure ou la partie extérieure du châssis.

4. La remorque forestière avec le mécanisme de déplacement des essieux selon l'une quelconque des revendications précédentes, **caractérisée en ce qu'**une commande du déplacement du châssis (2) est assurée par une télécommande, qui peut se trouver dans la remorque de chargement elle-même ou dans un tracteur.

5. La remorque forestière avec le mécanisme de déplacement des essieux de roue selon l'une quelconque des revendications précédentes, **caractérisée en ce que** le mouvement du châssis (2) est réalisé au moyen d'un hydromoteur et d'une crémaillère montée de manière appropriée ou de tout autre système qui transforme le mouvement circulaire en mouvement linéaire.

6. La remorque forestière avec le mécanisme de déplacement des essieux selon l'une quelconque des revendications précédentes, **caractérisée en ce que** le châssis (1) est constitué d'un cadre à un seul arbre, à deux arbres ou à plusieurs arbres, de préférence d'un cadre à deux arbres, l'arbre du cadre pouvant avoir n'importe quelle forme, de préférence la forme d'un tube.

7. La remorque forestière avec le mécanisme de déplacement des essieux selon l'une quelconque des revendications précédentes, **caractérisée en ce que** les accessoires (2c) du châssis (2) sont fabriqués de préférence sous la forme de profilés en U.

8. La remorque forestière avec le mécanisme de déplacement des essieux selon l'une quelconque des revendications précédentes, **caractérisée en ce que** les accessoires (2c) du châssis (2) sont adaptés à la forme des parties (1a et 1b) du châssis (1).

9. La remorque forestière avec le mécanisme de déplacement des essieux selon l'une quelconque des revendications précédentes, **caractérisée en ce que** des surfaces de glissement du châssis (2) peuvent être recouvertes d'un matériau quelconque pour réduire le frottement et l'usure, de préférence des matériaux synthétiques.

10. La remorque forestière avec le mécanisme de déplacement des essieux selon l'une quelconque des revendications précédentes, **caractérisée en ce que** les surfaces de glissement sont dépourvues de plaques coulissantes supplémentaires et la jonction entre le châssis en tandem (2) et le châssis (1) est assurée au moyen d'un contact métal-métal direct avec ou sans système intégré de lubrification.
